# EUROPÄISCHE PATENTSCHRIFT

(11) **EP 1 189 797 B1**
(45) Veröffentlichungstag und Bekanntmachung des Hinweises auf die Patenterteilung: **27.08.2003**
(21) Anmeldenummer: 00945647.6
(22) Anmeldetag: 21.06.2000
(51) Int. Cl.: B62D 5/083, B62D 5/097

(54) **STEUERVENTIL FÜR EINE HYDRAULISCHE LENKEINRICHTUNG**
CONTROL VALVE FOR A HYDRAULIC STEERING DEVICE
SOUPAPE DE COMMANDE POUR UN DISPOSITIF DE DIRECTION HYDRAULIQUE

(30) Priorität: 22.06.1999 DE 19928530
(43) Veröffentlichungstag der Anmeldung: 27.03.2002
(73) Patentinhaber: Bosch Rexroth AG, 97816 Lohr am Main (DE)
(72) Erfinder: BERGMANN, Erhard, D-19079 Banzkow (DE); VOSS, Gerhard, D-19370 Parchim (DE)
(74) Vertreter: Jaap, Reinhard
(86) Internationale Anmeldenummer: DE0001982
(87) Internationale Veröffentlichungsnummer: WO00078590

(56) Entgegenhaltungen:
- DE-A- 2 814 230
- US-A- 4 186 774
- PATENT ABSTRACTS OF JAPAN vol. 1999, no. 01, 29. Januar 1999 (1999-01-29) -& JP 10 264836 A (SUMITOMO EATON KIKI KK), 6. Oktober 1998 (1998-10-06) -& US 6 029 560 A (YAMAGUCHI MASAYOSHI) 29. Februar 2000 (2000-02-29)

## Beschreibung

Die Erfindung bezieht sich auf ein Steuerventil für eine hydraulische Lenkeinrichtung nach dem Oberbegriff des Anspruchs 1.

Derartige Lenkeinrichtungen arbeiten vollhydraulisch und werden vorzugsweise zum Lenken von schweren und langsamfahrenden Fahrzeugen eingesetzt.
In der Hauptsache besteht die Lenkeinrichtung aus einem Orbit-Verdränger mit einem innenverzahnten Außenring und einem außenverzahnten, einen Zahn weniger aufweisenden Rotor und einem, in ein Gehäuse eingepaßtes Drehschiebersteuerventil. Das Drehschiebersteuerventil setzt sich aus einer äußeren Steuerhülse und einem inneren Steuerkolben zusammen und ist hydraulisch mit dem Orbit-Verdränger verbunden. Der innere Steuerkolben hat einerseits mechanische Verbindung mit einem Lenkrad und andererseits mit dem Rotor des Orbit-Verdrängers. Der Steuerkolben und die Steuerhülse sind konzentrisch zueinander angeordnet und in einem begrenzten Winkel und gegen die Kraft einer Feder zueinander verdrehbar.
Diese Feder besteht in der Regel aus einem Paket von einzelnen, radial ausgerichteten Blattfedern, die sich an radialen Nuten in der Steuerhülse und im Steuerkolben abstützen. Das Federpaket simuliert einen von den Rädern ausgehenden Lenkwiderstand und führt anderseits bei unbelastetem Lenkrad das Steuerventil wieder in seine Neutralstellung zurück.
Ein solches Federpaket wird beispielsweise in der DE-PS 28 14 230 beschrieben, das aus zwei Blattfedern besteht, die über ihre gesamte Länge gleichmäßig gekrümmt sind, die mit ihren gewölbten Außenflächen gegeneinander ausgerichtet sind und die mit diesen Außenflächen aneinander anliegen. Zu beiden Seiten sind in Sandwichebauweise zwei gerade ausgerichtete Stützplatten angeordnet, die die gleiche Länge aufweisen. Die beiden Enden dieses aus Blattfedern und Stützplatten bestehenden Federpaketes tauchen in gegenüberliegende Nuten des Steuerkolbens und der Steuerhülse ein, wobei die Länge dieses Federpaketes kleiner als der Außendurchmesser der äußeren Steuerhülse ausgeführt ist.
Aus dieser konstruktiven Ausführung ergibt sich zwangsläufig, daß die gekrümmten Blattfedern des Federpaketes durch die unterschiedlichen Belastungsfälle zu wechselnden Längenveränderungen der beiden gekrümmten Blattfedern führen. Das führt zwangsläufig zu einem radialen Verschieben der beiden gekrümmten Blattfedern gegenüber den beiden geraden Stützplatten b.z.w. der beiden gekrümmten Blattfedern untereinander und damit zu einem radialen Ausbrechen aus dem Steuerventil. Die beiden Blattfedern kommen dadurch in Kontakt mit dem weichen Gehäusematerial und beschädigen es. Das hat funktionelle Beeinflussungen und eine geringe Lebensdauer der Lenkeinrichtung zur Folge.
Dieser Nachteil wurde in allgemein bekannter Weise dadurch beseitigt, daß die äußere Steuerhülse im Bereich des Federpaketes eine Außendurchmesserstufung erhalten hat, auf der ein gehärteter Ring aufgeschoben wird. Dieser Ring begrenzt das radiale Ausbrechen der gekrümmten Blattfedern und schützt das weiche Gehäuse.
Ein zusätzlicher Ring verteuert aber die Material-, die Fertigungs- und Montagekosten einer solchen Lenkeinrichtung.

Der Erfindung liegt daher die Aufgabe zugrunde, den radialen Sicherungsring für das Federpaket eines gattungsgemäßen Steuerventils unter Beibehaltung der Funktionssicherheit und der Lebensdauer einzusparen.

Diese Aufgabe wird durch die kennzeichnenden Merkmale des Anspruchs 1 gelöst.
Zweckdienliche Ausgestaltungen der Erfindung ergeben sich aus den Merkmalen der Ansprüche 2 und 3.

Damit werden die genannten Nachteile des Standes der Technik beseitigt.
Die Herstellungs-, Material- und Montagekosten werden gänzlich eingespart. Die Realisierung der neuen Kontur an den Stützblättern erfordern keine zusätzlichen Fertigungskosten. Materialkosten werden zusätzlich auch dadurch eingespart, daß die Federblätter kürzer ausgeführt werden können. Durch die kürzeren Federblätter stellt sich auch ein zusätzlicher funktioneller Vorteil ein. So führen die kürzeren Federblätter zu einer erhöhten Federkraft und damit zu einem kürzeren Federweg in der Neutralstellung.

Die Erfindung soll nachstehend an Hand eines Ausführungsbeispieles näher erläutert werden.

Dazu zeigen
- Fig. 1:: eine hydraulische Lenkeinrichtung im Schnitt,
- Fig. 2.: ein Steuerventil im Schnitt,
- Fig. 3:: ein Stützblatt in zwei Ansichten,
- Fig. 4:: ein Federblatt in zwei Ansichten,
- Fig. 5:: die äußere Steuerhülse in einer Seiten-ansicht und
- Fig. 6:: die äußere Steuerhülse in einem teilweisen Längsschnitt.

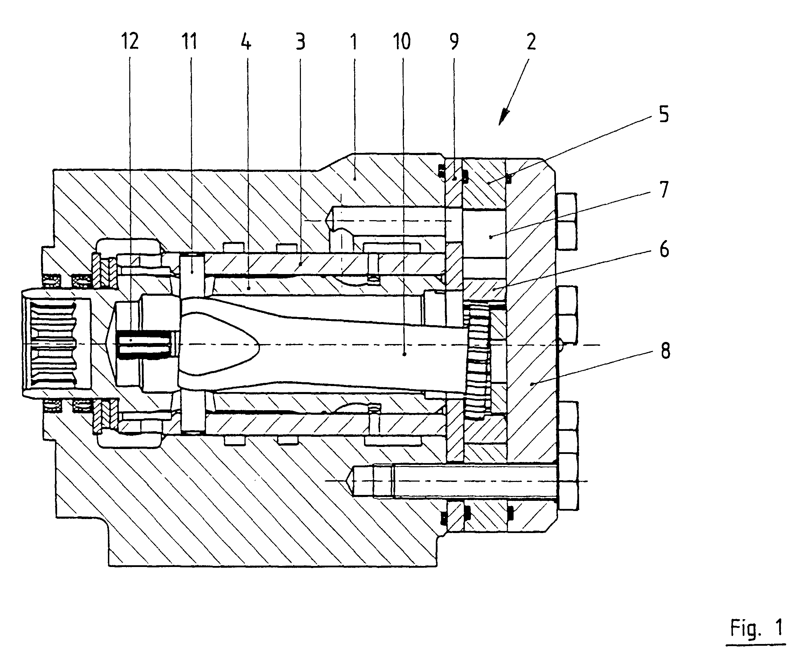

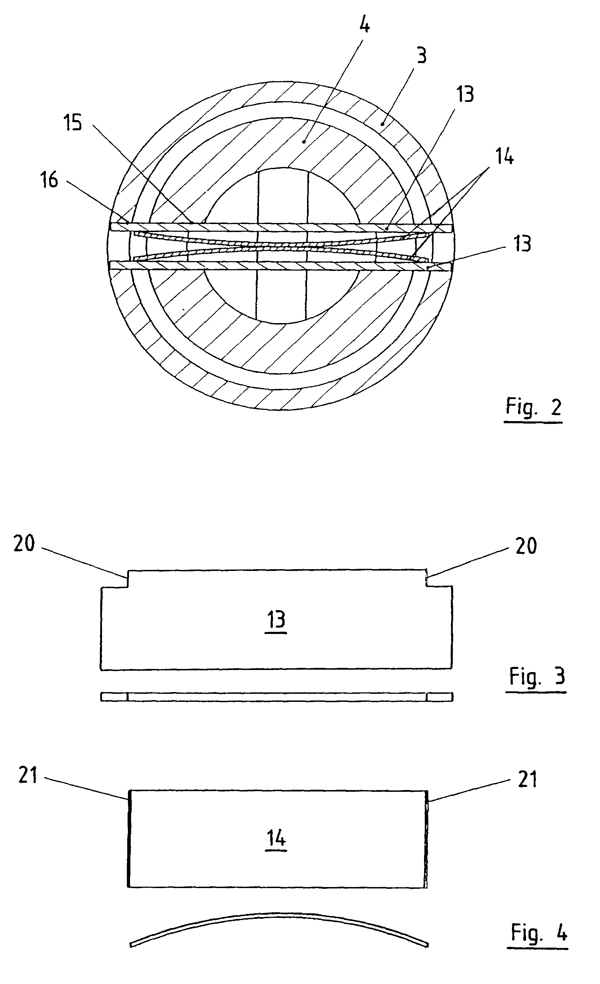

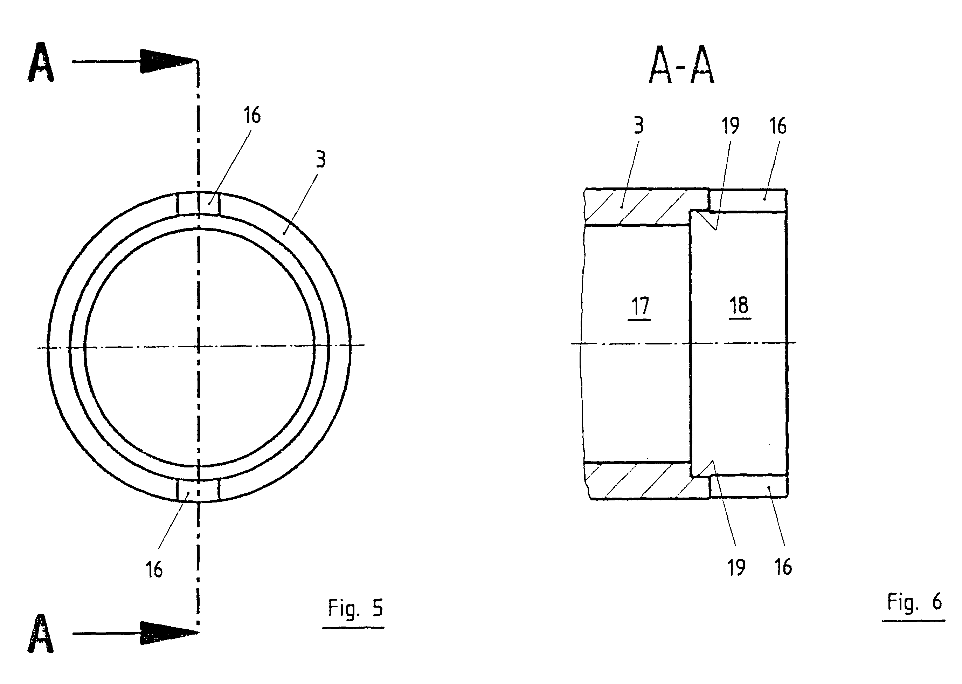

Die hydraulische Lenkeinrichtung besitzt einen Zulaufanschluß für eine Förderpumpe, zwei Zylinderanschlüsse für die gelenkten Räder und einen Rücklaufanschluß für den Tank.
Gemäß der Fig. 1 besteht die Lenkeinrichtung in der Hauptsache aus einem Gehäuse 1, einem nach dem Gerotor-Prinzip arbeitenden Verdränger 2, der stirnseitig an das Gehäuse 1 angeflanscht ist sowie aus einem nach dem Drehschieberprinzip arbeitenden Steuerventil mit einer äußeren, im Gehäuse 1 eingepaßten Steuerhülse 3 und einem inneren, in der Steuerhülse 3 laufenden Steuerkolben 4. Der Verdränger 2 besteht aus einem innenverzahnten Außenring 5 und einem außenverzahnten, einen Zahn weniger aufweisenden Rotor 6, die zwischen sich Verdrängerkammern 7 ausbilden. Diese Verdrängerkammern 7 sind über Kanäle im Gehäuse 1 hydraulisch mit dem Steuerventil und mit einem Lenkzylinder verbunden. Der Verdränger 2 ist mit einem Deckel 8 und einer Zwischenscheibe 9 mit dem Gehäuse 1 verschraubt.
Der innenliegende Steuerkolben 4 des Steuerventils hat eine drehfeste Verbindung mit einem nicht dargestellten Handrad. Innerhalb des Steuerkolbens 4 ist eine Antriebswelle 10 angeordnet, die einerseits über ein balliges Zahnnabenprofil mit dem Rotor 6 des Verdrängers 2 und anderseits über einen, den Steuerkolben 4 durchdringenden Stift 11 mit der äußeren Steuerhülse 3 verbunden ist. Dieser Stift 11 begrenzt im Zusammenspiel mit einer vergrößerten Bohrung im inneren Steuerkolben 4 den Verdrehwinkel zwischen der Steuerhülse 3 und dem Steuerkolben 4.
Die Steuerhülse 3 und der Steuerkolben 4 sind auf dem verdrängerabgewandten Ende über ein radial angeordnetes Federpaket 12 miteinander verbunden.
Gemäß der Fig. 2 besteht dieses Federpaket 12 aus zwei außenliegenden und gerade ausgerichteten Stützblättern 13 und zwei inneren und gewölbten Federblättern 14. Dabei sind beide Federblätter 14 über ihre ganze Länge gleichmäßig gewölbt und mit ihren jeweiligen konvexen Außenflächen einander zugewandt angeordnet. Andererseits stützen sich die gewölbten Federblätter 14 an beiden Enden mit ihren konkaven Innenseiten an den benachbarten Stützblättern 13 ab.
Durch die Sandwichebauweise ergibt sich eine bestimmte Höhe für das Federpaket 12, die unter einer gewählten Vorspannung auf eine Einbauhöhe reduziert wird. Zur Aufnahme des Federpaketes 12 sind der innere Steuerkolben 4 und die äußere Steuerhülse 3 mit jeweils einer, auf die Einbauhöhe des Federpaketes 12 abgestimmten und durchgehenden radialen Nut 15 und 16 ausgebildet.
Die von den Stirnseiten der Steuerhülse 3 und des Steuerkolbens 4 betrachteten Tiefen beider Nuten 15 und 16 sind unterschiedlich ausgeführt. So hat die Nut 16 in der äußeren Steuerhülse 3 eine geringere Tiefe als die Nut 15 im inneren Steuerkolben 4.
Wie die Fig. 5 und 6 zeigen, besitzt die äußere Steuerhülse 3 eine Durchgangsbohrung 17, die im Bereich der Nut 16 eine Durchmessererweiterung 18 aufweist. Diese Durchmessererweiterung 18 weist eine größere Tiefe als die Tiefe der Nut 16 und eine gleiche bzw. geringere Tiefe wie die Nut 15 des Steuerkolbens 4 auf. Damit bildet sich ein innerer radialer Anschlag 19 aus.
Gemäß den Fig. 3 und 4 weisen die Stützblätter 13 und die Federblätter 14 besondere äußere Abmessungen und Formen auf.
So ist jedes Federblatt 14 über seine gesamte Länge gleichmäßig gekrümmt und besitzt eine Breite, die auf die Tiefe der durchgehenden Nut 15 im Steuerkolben 4 und der Tiefe der Durchmessererweiterung 18 in der Steuerhülse 3 abgestimmt ist. Ein Teil der Stirnfläche des Pederblattes 14 ist als ein radiale Anschlagfläche 21 ausgebildet. Die gestreckte Länge jedes Federblattes 14 ist gleich oder kleiner als der Durchmesser der Durchmessererweiterung 18 der Steuerhülse 3 ausgeführt.
Die Länge des Stützblattes 13 ist abgesetzt ausgeführt, wobei die größte Länge mit Spiel auf den Außendurchmesser der äußeren Steuerhülse 3 angepaßt ist und die kleinere Länge gleich oder kleiner als der Durchmesser der Durchmessererweiterung 18 im inneren Steuerkolben 4 ist. Damit bildet sich am Stützblatt 13 im Bereich der kleineren Länge eine radiale Anschlagfläche 20 aus. Mit der gestuften Länge des Stützblattes 13 ergibt sich auch eine gestufte Breite, wobei die geringere Breite der Tiefe der Nut 16 in der Steuerhülse 3 und die größere Breite der Tiefe der Durchmessererweiterung 18 in der Steuerhülse 3 entspricht. Die größere Breite des Stützblattes 13 und die Breite des Federblattes 14 sind gleich ausgeführt.

Die Funktion einer hydraulischen Lenkeinrichtung ist allgemein bekannt und wird daher nur in kurzer Form beschrieben.
Bei nichtbetätigter Lenkung ist der innere Steuerkolben 4 und die äußere Steuerhülse 3 durch die Kraft des Federpaketes 12 in ihre Mittelstellung zentriert. Das Öl fließt vom Zulaufanschluß über geöffnete Kurzschlußkanäle des Steuerventiles direkt zum Ablaufanschluß und damit zum Tank zurück.
Bei Drehung des Handrades werden der Steuerkolben 4 und die Steuerhülse 3 entgegen der Kraft des Federpaketes 12 aus ihre Mittelstellung in eine Arbeitsstellung verdreht. Dabei werden die Kurzschlußkanäle verkleinert und zum Verdränger 2 führende Arbeitskanäle geöffnet, wodurch der Zulaufstrom in zwei Teilströme aufgeteilt wird. Der erste Teilstrom führt über das Steuerventil und den Verdränger 2 zum Lenkzylinder und von dort wieder über das Steuerventil zum Ablaufanschluß zurück. Der zweite Teilstrom wird direkt über das Steuerventil zum Ablaufanschluß geführt.

Bei maximaler Auslenkung am Handrad werden die Kurzschlußkanäle geschlossen und der gesamte Zulaufstrom gelangt dosiert zum Lenkzylinder.
Nach Beendigung des Lenkvorganges läuft infolge der Kraft des Federpaketes 12 die äußere Steuerhülse 3 soweit nach, bis die Steuerhülse 3 und der Steuerkolben 4 wieder zentriert sind.
Durch die unterschiedlichen und wechselnden relativen Verdrehwinkel des inneren Steuerkolbens 4 und der äußeren Steuerhülse 3 werden unterschiedliche Belastungsfälle über die Stützblätter 13 auf die Federblätter 14 übertragen, sodaß sich die Federblätter 14 an ihren konvexen Außenflächen gegenseitig abstützen müssen. Dabei treten an den Federblättern 14 radiale Kraftkomponenten auf, die die Federblätter 14 und auch die durch Reibung angeschlossenen Stützblätter 13 einzeln oder gemeinsam in die eine oder in die andere radiale Richtung belasten. Eine daraus entstehende radiale Verschiebung der Stützblätter 13 und der Federblätter 14 wird dadurch begrenzt, daß die radialen Anschlagflächen 21 der Stirnflächen der Federblätter 14 und die radialen Anschlagflächen 20 der Stützblätter 13 am radialen Anschlag 19 der Durchmessererweiterung 18 in der äußeren Steuerhülse 3 zur Anlage kommen. Eine optimierte Längenabstimmung der Federblätter 14 und der Stützblätter 13 gegenüber den Durchmesserverhältnissen an der äußeren Steuerhülse 14 verhindern einen Kontakt der Federblätter 14 und der Stützblätter 13 mit der Bohrungswandung im weichen Gehäuse 1.

### Aufstellung der Bezugszeichen

- 1: Gehäuse
- 2: Verdränger
- 3: Steuerhülse
- 4: Steuerkolben
- 5: Außenring
- 6: Rotor
- 7: Verdrängerkammer
- 8: Deckel
- 9: Zwischenscheibe
- 10: Antriebswelle
- 11: Stift
- 12: Federpaket
- 13: Stützblatt
- 14: Federblatt
- 15: Nut im Steuerkolben
- 16: Nut in der Steuerhülse
- 17: Durchgangsbohrung
- 18: Durchmessererweiterung
- 19: radialer Anschlag
- 20: radiale Anschlagfläche, Stützblatt
- 21: radiale Anschlagfläche, Federblatt

## Patentansprüche

1. Steuerventil für eine hydraulische Lenkeinrichtung, das als Drehsteuerventil ausgeführt ist und aus einem Gehäuse (1), einer äußeren Steuerhülse (3) und einem inneren Steuerkolben (4) besteht, wobei
- die Steuerhülse (3) hydraulisch einerseits mit einem Zulaufanschluß und einem Ablaufanschluß und andererseits mit einem Verdränger (2) und der Steuerkolben (4) mechanisch einerseits mit einem Handrad und andererseits mit der Steuerhülse (3) verbunden ist und
- der Steuerkolben (4) und die Steuerhülse (3) über ein Federpaket (12) begrenzt zueinander verdrehbar sind, wobei das Federpaket (12)
- in radial verlaufende Nuten (15, 16) des Steuerkolbens (4) und der Steuerhülse (3) eingepaßt ist,
- aus mindestens zwei äußeren Stützblättern (13) und mindestens zwei inneren und gekrümmten, mit ihren konvexen Außenflächen aneinander liegenden Federblättern (14) besteht und
- eine radiale Sicherung besitzt,
**dadurch gekennzeichnet, daß** die Steuerhülse (3) im Bereich der radialen (16) Nut einen integrierten radialen Anschlag (19) besitzt und ein Teil der Stirnfläche jedes Stützblattes (13) als eine radiale Anschlagfläche (20) und ein Teil der Stirnfläche jedes Federblattes (14) als eine radiale Anschlagfläche (21) ausgebildet ist.

2. Steuerventil nach Anspruch 1,
**dadurch gekennzeichnet, daß** der radiale Anschlag (19) der äußeren Steuerhülse (3) durch eine Durchmessererweiterung (18) der Durchgangsbohrung (17) und die radialen Anschlagflächen (20) der Stützblätter (13) durch eine Längenabstufung gebildet wird.

3. Steuerventil nach Anspruch 2,
**dadurch gekennzeichnet, daß** die größere Länge der Stützblätter (13) gleich oder kleiner als der Außendurchmesser der Steuerhülse (3) und die geringere Länge gleich oder kleiner als der Durchmesser der Durchmessererweiterung (18) ist und die gestreckte Länge jedes Federblattes (14) gleich oder kleiner als der Durchmesser der Durchmessererweiterung (18) ist.

## Claims

1. Control valve for a hydraulic steering device, which control valve is designed as a rotary control valve and comprises a housing (1), an outer control sleeve (3) and in inner control piston (4), wherein
- the control sleeve (3) is hydraulically connected, on the one hand, to a supply connection and a discharge connection and, on the other hand, to a displacer (2) and the control piston (4) is mechanically connected, on the one hand, to a handwheel and, on the other hand, to the control sleeve (3) and
- the control piston (4) and the control sleeve (3) are rotatable to a limited extent relative to one another by means of a spring assembly (12), wherein the spring assembly (12)
- is fitted into radially extending grooves (15, 16) of control piston (4) and control sleeve (3),
- comprises at least two outer support leaves (13) and at least two inner and curved spring leaves (14) situated with their convex outer surfaces adjacent to one another and
- has a radial retaining device,
**characterized in that** the control sleeve (3) in the region of the radial (16) groove has an integrated radial stop (19) and a part of the end face of each support leaf (13) is designed as a radial stop face (20) and a part of the end face of each spring leaf (14) is designed as a radial stop face (21).

2. Control valve according to claim 1,
**characterized in that** the radial stop (19) of the outer control sleeve (3) is formed by a diameter enlargement (18) of the through-bore (17) and the radial stop faces (20) of the support leaves (13) are formed by a longitudinal graduation.

3. Control valve according to claim 2,
**characterized in that** the larger length of the support leaves (13) is equal to or less than the outside diameter of the control sleeve (3) and the smaller length is equal to or less than the diameter of the diameter enlargement (18) and the effective length of each spring leaf (14) is equal to or less than the diameter of the diameter enlargement (18).

## Revendications

1. Soupape de commande pour une installation de direction hydraulique, laquelle est réalisée en tant que vanne de commande rotative et est composée d'un boîtier (1), d'un manchon de commande (3) extérieur et d'un piston de commande (4) intérieur, pour laquelle
- le manchon de commande (3) est relié hydrauliquement d'une part à un raccordement d'alimentation et à un raccordement de sortie et d'autre part à un refouleur (2), et le piston de commande (4) est relié mécaniquement d'une part à un volant et d'autre part au manchon de commande (3),
- le piston de commande (4) et le manchon de commande (3) peuvent être mis en rotation l'un par rapport à l'autre de façon limitée au moyen d'un bloc-ressort (12), le bloc-ressort (12)
- étant ajusté dans des rainures (15, 16), qui s'étendent radialement, du piston de commande (4) et du manchon de commande (3),
- étant composé d'au moins deux lames d'appui (13) extérieures et d'au moins deux lames de ressort (14) intérieures et recourbées dont les surfaces extérieures convexes sont placées l'une contre l'autre et
- possédant une sécurité radiale,
**caractérisée en ce que**
le manchon de commande (3) possède dans la zone de la rainure radiale (16) une butée radiale intégrée, et une partie de la surface frontale de chaque lame d'appui (13) est formée en tant que surface de butée (20) radiale et une partie de la surface frontale de chaque lame de ressort (14) en tant que surface de butée (21) radiale.

2. Soupape de commande selon la revendication 1,
**caractérisée en ce que**
la butée (19) radiale du manchon de commande (3) extérieur est formée par un élargissement de diamètre (18) du perçage traversant (17), et les surfaces de butée (20) radiales des lames d'appui (13) sont formées par un gradin en longueur.

3. Soupape de commande selon la revendication 2,
**caractérisée en ce que**
la plus grande longueur des lames d'appui (13) est égale ou inférieure au diamètre extérieur du manchon de commande (3) et la plus petite longueur des lames d'appui (13) est égale ou inférieure au diamètre de l'élargissement de diamètre (18), et la longueur allongée de chaque lame de ressort (14) est égale ou inférieure au diamètre de l'élargissement de diamètre (18).
